(19) Europäisches Patentamt

European Patent Office

Office européen des brevets

(11) Publication number : **0 457 608 A2**

(12) **EUROPEAN PATENT APPLICATION**

(21) Application number : **91304459.0**

(22) Date of filing : **17.05.91**

(51) Int. Cl.⁵ : **G06F 13/42,** G06F 1/06, H03K 7/08

(30) Priority : **17.05.90 JP 128051/90**

(43) Date of publication of application :
**21.11.91 Bulletin 91/47**

(84) Designated Contracting States :
**DE FR GB**

(71) Applicant : **NEC CORPORATION**
**7-1, Shiba 5-chome Minato-ku**
**Tokyo 108-01 (JP)**

(72) Inventor : **Akiyama, Shin-Ichiro, c/o NEC**
**Corporation**
**7-1, Shiba 5-chome, Minato-ku**
**Tokyo (JP)**

(74) Representative : **Brown, David Alan et al**
**MATHYS & SQUIRE 10 Fleet Street**
**London EC4Y 1AY (GB)**

(54) Apparatus for selecting a clock signal of a circuit controlled by a single chip microcomputer.

(57)   An apparatus includes a clock generating circuit which generates a plurality of clock signals having different frequencies, a switching circuit which selects a clock signal having a desired frequency from the plurality of clock signals, and a selection controller which controls the selecting circuit to select the clock signal having the desired frequency. The apparatus operates in synchronization with the clock signal selected. The present invention is particularly useful for peripheral circuits such as a pulse width modulation circuit integrated with a single chip microcomputer.

EP 0 457 608 A2

# FIG.2

**101 FUNDAMENTAL CLOCK GENERATOR**

100

FREQUENCY DIVIDER — 101a

WAVEFORM SHAPING CIRCUIT — 101b

101c

103 → φ1 } TO CPU OF MICRO-COMPUTER

103 → φ2

ORIGINAL CLOCK GENERATOR — 201

204 φ1

204 φ2

205 ~ CLOCK SWITCHING CIRCUIT

FROM CPU OF MICRO-COMPUTER

PERIPHERAL CIRCUIT ~ 102

## FIELD OF THE INVENTION

The present invention relates to an apparatus for selecting a clock signal of a circuit controlled by a single chip microcomputer, and more particulary to, an apparatus for controlling a peripheral circuit of a single chip microcomputer to operate at a high or low speed by selecting a clock signal.

## BACKGROUND OF THE INVENTION

A conventional single chip microcomputer comprises a CPU for controlling a peripheral circuit such as a pulse width modulation (PWM) circuit to operate, a ROM for storing a program to controll operation of the peripheral circuit, and a RAM for temporaily storing data necessary to control the operation of the peripheral circuit, and is supplied with a fundamental clock signal from a clock generator which comprises a frequency divider for dividing an external clock signal by a predetermined dividing ratio, and a waveform shaping circuit for shaping the divided external clock signal.

In operation, an external clock signal of, for instance, 8MHz is supplied to the frequency divider to provide a clock signal of 4MHz which is obtained by the division using a dividing ratio of "2". The 4MHz clock signal is then supplied to the waveform shaping circuit to generate a two phase fundamental clock signal of 4MHz which is supplied to the CPU and the peripheral circuit. Thus, the CPU controls the peripheral circuit to operate at an operation speed of the 4MHz fundamental clock signal by use of the program of the ROM and data of the RAM, so that predetermined operation is carried out in the peripheral circuit.

However, the conventional single chip microcomputer has a disadvantage in that an operation speed of the peripheral circuit is fixed by the fundamental clock signal which is obtained by the division of the external clock signal, so that it can not operate at a speed higher than that determined by the fundamental clock signal.

## SUMMARY OF THE INVENTION

Accordingly, it is an object of the present invention to provide an apparatus for selecting a clock signal of a circuit controlled by a single chip microcomputer, in which the circuit operates at a speed selected from a speed of a fundamental clock signal and a speed higher than the speed of the fundamental clock signal.

According to the present invention, an apparatus for selecng a clock signal of a circuit controlled by a single chip microcomputer, comprises: a circuit for generating a fundamental clock signal by dividing an external clock signal by a predetermined dividing ratio; a circuit for generating an original clock signal based on the external clock signal; and a circuit for selecting one of the fundamental and original clock signals dependent on a clock data supplied from the single chip microcomputer; wherein the circuit controlled by the single chip microcomputer operates at a speed determined by a clock signal selected by the selecting circuit.

In a preferred embodiment, it will be explained that the clock signal switching apparatus of the present invention will be applied to a phase width modulation circuit which is a peripheral circuit of a single chip microcomputer to be included in the common semiconductor ship. In addition, it may be applied to a D/A converter, an encorder or decorder, a circuit for driving a peripheral equipment such as a display, etc., and the like.

## BRIEF DESCRIPTION OF THE DRAWINGS

The present invention will be explained in more detail in conjunction with appended drawings, wherein:

Fig. 1 is a block diagram showing a conventional apparatus for generating a fundamental clock signal supplied to a microcomputer and a peripheral circuit;

Fig. 2 is a block diagram showing an apparatus for selecting a clock signal of a circuit controlled by a single chip microcomputer in a preferred embodiment according to the invention;

Fig. 3 is a block diagram showing a pulse width modulation circuit, to which the apparatus for selecting a clock signal of a circuit controlled by a single chip microcomputer in the preferred embodiment as shown in Fig. 2 is applied; and

Fig. 4 is a timing chart showing operation of the pulse width modulation circuit in Fig. 3.

## DESCRIPTION OF THE PREFERRED EMBODIMENTS

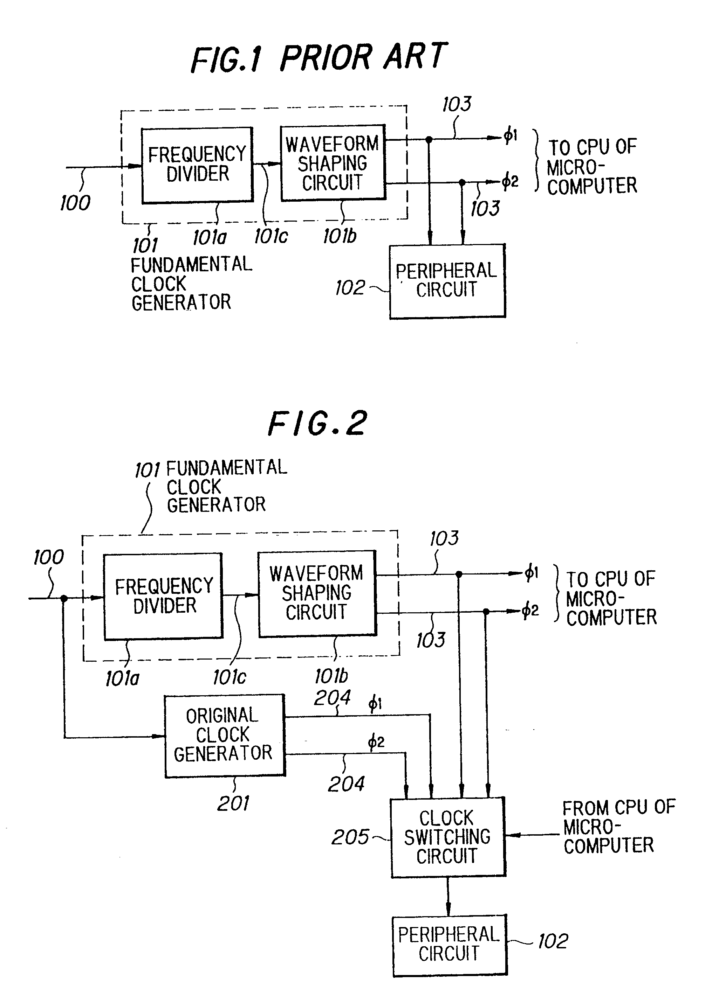

A detailed description will now be given of the conventional single chip microcomputer with reference to Fig. 1, in which only a fundamental clock generator 101 and a peripheral circuit 102 are shown. The fundamental clock generator 101 comprises a frequency divider 101a and a waveform shaping circuit 101b.

In operation, an external clock signal 100 is supplied from an external clock generator (not shown) to the frequency divider 101 a. Thus, the external clock signal 100 is divided in frequency to provide a divided clock 101c by a dividing ratio of "2". That is, the external clock signal 100 having a frequency of 8MHz is changed to be the divided clock signal 101c having a frequency of 4MHz. Then, the divided clock signal 101c is supplied to the waveform shaping circuit 101b.

Consequently, the waveform of the divided clock signal 101c is shaped by the waveform shaping circuit 101b, and thus the fundamental clock signal 103 of two phases $\phi_1$ and $\phi_2$ is generated. The fundamental clock signal 103 is supplied from the waveform shaping circuit 101b to the CPU and the peripheral circuit 102, respectively. Thus, the peripheral circuit 102 operates at a speed of the fundamental clock signal 103 by control of the CPU.

A description will now be given of an apparatus for selecting a clock signal of a circuit controlled by a single chip microcomputer in the preferred embodiment according to the present invention with reference to Fig. 2.

This clock signal selecting apparatus comprises a fundamental clock generator 101 for generating a fundamental clock signal 103 of two phases ø1 and ø2 by dividing an external clock signal 100 by a dividing ratio of "2", an original clock generator 201 for generating an original clock signal 204 of two phases $\phi_1$ and $\phi_2$ based on the external clock signal 100, and a clock switching circuit 205 for selecting one of the fundamental and original clock signals 103 and 204 dependent on a clock data supplied from the microcomputer (not shown) to supply the selected clock signal to a peripheral circuit 102 which is controlled by the microcomputer. The fundamental clock generator 101 comprises a frequency divider 101a and a waveform shaping circuit 101b as explained in Fig. 1.

In operation, the external clock signal 100 of, for instance, 8MHz is supplied to the frequency divider 101a of the fundamental clock generator 101 and the original clock generator. In the frequency divider 101a, a divided clock signal of 4MHz is obtained by a dividing ratio of "2", and is supplied to the waveform shaping circuit 101b, from which the fundamental clock signal 103 of two phases $\phi_1$ and $\phi_2$ having a frequency of 4MHz is supplied to the clock switching circuit 205. At the same time, the original clock generator 201 generates and supplies the original clock signal 204 of 8MHz to the clock switching circuit 205. On the other hand, a clock data is supplied to the clock switching circuit 205, in which one of the fundamental and original clock signals 103 and 204 is selected, form a CPU of the microcomputer. When the clock data is high, the fundamental clock signal 103 is selected to be supplied to the peripheral circuit 102, so that the peripheral circuit 102 operates at a speed of 4MHz. On the contrary, when the clock data is low, the original clock signal 204 is selected, so that the peripheral circuit 102 operate at a higher speed determined by the original clock signal of 8MHz.

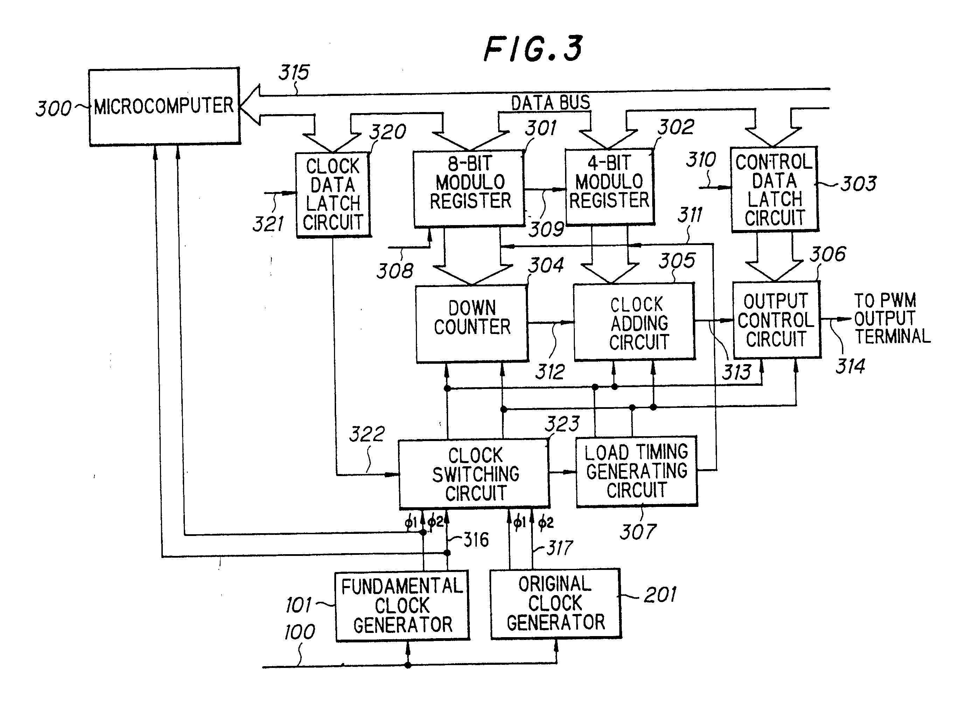

Fig. 3 shows a pulse width modulation circuit, to which the clock signal selecting apparatus as shown in Fig. 2 is applied. The pulse width modulation circuit is connected to a microcomputer 300 by a data bus 315, and comprises an 8-bit modulo register 301 for holding a data of determining a pulse width, a 4-bit modulo register 302 for holding a data of increasing a precision of the pulse width, a control data latch circuit 303 for latching a control data of determining the output of a pulse width modulation signal, a down counter 304 for loading and down-counting the pulse width determining data to provide a coincidence signal 312, one-clock adding circuit 305 for generating a pulse width modulation signal 313, a width of which is determined by the coincidence signal 312, and to which one-clock width is added dependent on a content of the 4-bit modulo register 302, an output control circuit 306 for controlling the output of the pulse width modulation signal 313 to provide an output pulse width modulation signal 314, a load timing generating circuit 307 for generating a load signal, by which the contents of the 8- and 4-bit modulo registers 301 and 302 are loaded into the down-counter 304 and the one-clock adding circuit 305, respectively, and a clock data latch circuit 320 for latching a clock data 322 of selecting one of fundamental and original clock signals 316 and 317 which are supplied from the fundamental and clock generator 101 and 201 to a clock switching circuit 323 in accordance with an external clock signal 100.

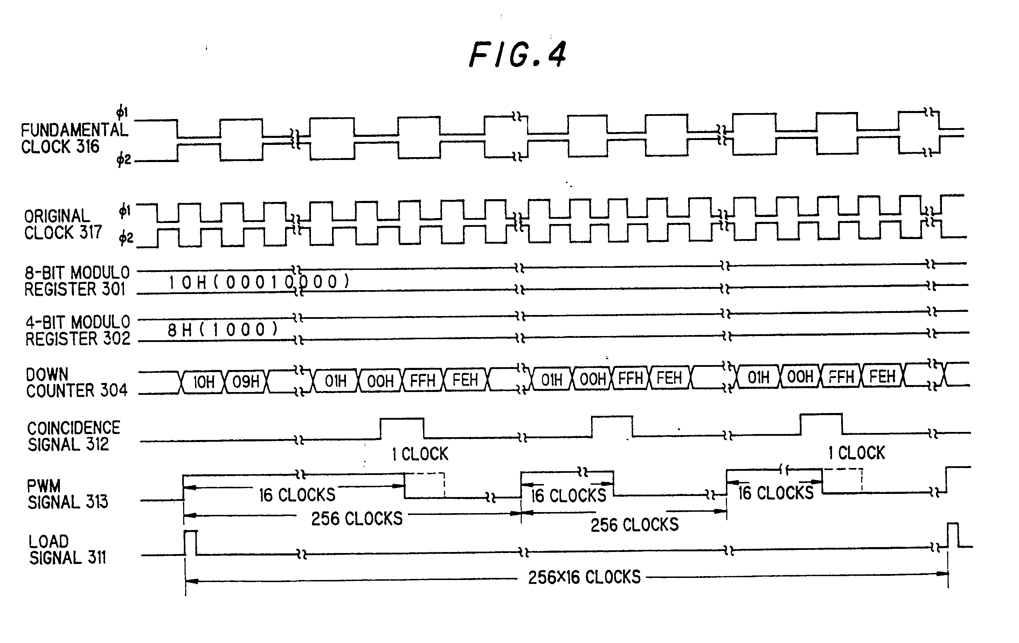

Next, operation will be explained in conjunction with Fig. 4. The fundamental clock signal 316 of 4MHz is supplied from the fundamental clock generator 101 to a CPU of the microcomputer 300, so that the pulse width data "00010000 (=10H)" and the one-clock adding data "1000(=8H)" are transferred from a RAM of the microcomputer 300 through the data bus 315 to the 8-and 4-bit modulo registers 301 and 302 and held therein by latch signals 308 and 309, and the control data and the clock data are transferred to be held in the control data latch circuit 303 and the clock data latch circuit 320, respectively, by latch signals 310 and 321. Here, it is assumed that the clock data held in the clock data latch circuit 320 is low to select the original clock signal 317 of 8MHz. When the clock data 322 is supplied to the clock switching circuit 323, the load signal 311 is generated by the load timing generating circuit 307, so that the pulse width data and the one-clock adding data are loaded in the down counter 304 and the one-clock adding circuit 305, respectively. Simultaneously, the down-counter starts the down-counting of the data "10H" one by one in response to one clock of the original clock signal of 8MHz, and an output of the one-clock adding circuit 305 becomes high to provide a rise of the pulse width modulation signal 313. When the content of the down counter 304 becomes zero by the elapse of 16 (=10H) clocks of the original clock signal 317, a coincidence signal 312 is generated to be supplied from the down counter 304 to the one-clock adding circuit 305, so that the output of the one-clock adding circuit 305 becomes low to provide a fall of the pulse-width modulation signal 313 having a pulse width of 16 clocks. At this time, whether one clock is added to the 16 clock pulse width modulation signal 313 or not is determined in the one-clock adding circuit 305 by reference to the data "1000(=8H)" transferred from the 4-bit modulo register 302. Here, one-clock adding theory will be explained. The maximum value of the 4-bit modulo register 302 is "1111(=$15_{10}$)". The value now transferred from the 4-bit modulo register 302 is "1000 (=$8_{10}$)". Thus, the calculation "$8/_{(15+1)}=1/2$" provides that one clock should be added to one of two pulse width modulation signals each having a pulse width of 16 clocks. For this calculation, a pulse width modulation signal 313 having a pulse width of 17 (16 + 1) clocks is supplied from the one-clock adding circuit 305 to the output control circuit 306, through which the pulse width modulation signal 313 is supplied as an output pulse width modulation signal 314 to the output terminal by the control data of the control data latch circuit 303. Simultaneously with the addition of one clock, the down counter is loaded with a content of "11111111 (=FFH)" to be counted downwardly one by one in response to one clock of the original clock signal 317.

After the generation of the pulse width modulation signal 313 having a pulse width of 17 (16 + 1) clocks, the output of the one-clock adding circuit 305 becomes high again to provide a rise of the subsequent pulse width modulation signal 313 by the elapse of 256 clocks of the original clock signal 317 which is defined "one block" in this preferred embodiment. Thus, the pulse width modulation signal 313 having a pulse width of 16 clocks is generated in the one-clock adding circuit 306 without addition of one clock, since the calculation result is "1/2" to add one clock to the preceding pulse width modulation signal 313, but to add no clock to the present pulse width modulation signal. A fall of the pulse width modulation signal 313 of 16 clocks is caused by the coincidence signal 312 supplied from the down counter 304, the content of which becomes "00H" by counting formerly loaded content of "FFH" downwardly. Then, the down counter 304 is renewed again to be load with "FFH". Thus, operation of 16 blocks each consisting of 256 clocks of the original clock signal 317 is continued to generate 8 pulse width modulation signals 313 having a pulse width of 17 (16 + 1) clocks and 8 pulse width modulation signals 313 having a pulse width of 16 clocks. This is equal to the generation of 16 pulse width modulation signals 313 each having a pulse width of 16.5 clocks. Then, new data which are determined by a program stored in a ROM of the microcomputer 300 are transferred to the 8- and 4-bit modulo registers 301 and 302 to start the next 16 block operation in the same manner as explained above.

On the other hand, assuming that data of the clock data latch circuit 320 is high, the down counter 304, the one-clock adding circuit 305, and the output control circuit 306 are controlled to operate by selecting the fundamental clock signal 316 supplied from the fundamental clock generator 101 in the same manner as in the selection of the original clock signal 317.

Although the invention has been described with respect to specific embodiment for complete and clear disclosure, the appended claims are not to be thus limited but are to be construed as embodying all modification and alternative constructions that may occur to one skilled in the art which fairly fall within the basic teaching herein set forth.

## Claims

1. An apparatus for selecting a clock signal of a circuit controlled by a single chip microcomputer, comprising:

    a circuit for generating a fundamental clock signal by dividing an external clock signal by a predetermined dividing ratio;

    a circuit for generating an original clock signal based on said external clock signal, a frequency of said original clock signal being larger than that of said fundamental clock signal; and

    a circuit for selecting one of said fundamental and original clock signals dependent on a clock data supplied from said single chip microcomputer;

    wherein said circuit controlled by said single chip microcomputer operates at a speed determined by a clock signal selected by said selecting circuit.

2. An apparatus for selecting a clock signal of a circuit controlled by a single chip microcomputer, according to claim 1, wherein:

    said single chip microcomputer operates with said fundamental clock signal; and

    said circuit controlled by said single chip microcomputer operates with said original clock signal.

3. An apparatus for selecting a clock signal of a circuit controlled by a single chip microcomputer, according to claim 1, wherein:

    said circuit controlled by said single chip microcompuer is a pulse width modulation circuit.

4. An apparatus for selecting a clock signal of a circuit controlled by a single chip microcomputer, according to claim 3, wherein:

    said pulse width modulation circuit, comprises:

    a register for storing a predetermined number of bits to determine a pluse width; and

    a circuit for generating a pulse width modulation signal dependent on said predetermined number of bits.

5. An apparatus for selecting a clock signal of a circuit controlled by a single chip microcomputer, according to claim4, wherein:

said register comprises a first register for storing a first predetermined number of bits to determine a basic pulse width, and a second register for storing a second predetermined number of bits to determine necessity of adding one clock width to said basic pulse width; and

said generating circuit generates a predetermined number of pulse width modulation signals, a predetermined number of said pulse width modulation signals having a pulse width equal to said basic pulse width, and remaining of said pulse width modulation signals having a pulse width obtained by adding said one clock width to said basic clock width.

## FIG.1 PRIOR ART

FREQUENCY DIVIDER

WAVEFORM SHAPING CIRCUIT

103

φ1

φ2

103

TO CPU OF MICRO-COMPUTER

100

101
FUNDAMENTAL CLOCK GENERATOR

101a

101c

101b

102

PERIPHERAL CIRCUIT

## FIG.2

101 FUNDAMENTAL CLOCK GENERATOR

100

FREQUENCY DIVIDER

WAVEFORM SHAPING CIRCUIT

103

φ1

φ2

TO CPU OF MICRO-COMPUTER

103

101a

101c

101b

ORIGINAL CLOCK GENERATOR

204

φ1

φ2

204

201

205

CLOCK SWITCHING CIRCUIT

FROM CPU OF MICRO-COMPUTER

PERIPHERAL CIRCUIT

102

# FIG.3

MICROCOMPUTER 300

315 DATA BUS

CLOCK DATA LATCH CIRCUIT 320 / 321

8-BIT MODULO REGISTER 301

4-BIT MODULO REGISTER 302

CONTROL DATA LATCH CIRCUIT 303 / 310

DOWN COUNTER 304 / 308

CLOCK ADDING CIRCUIT 305 / 309 / 311

OUTPUT CONTROL CIRCUIT 306 / 313

TO PWM OUTPUT TERMINAL 314

CLOCK SWITCHING CIRCUIT 322

LOAD TIMING GENERATING CIRCUIT 323 / 307

312

φ1 φ2 316

φ1 φ2 317

FUNDAMENTAL CLOCK GENERATOR 101

ORIGINAL CLOCK GENERATOR 201

100

EP 0 457 608 A2

# FIG.4

EP 0 457 608 A2